# EUROPÄISCHE PATENTSCHRIFT

(11) **EP 0 599 312 B1**
(45) Veröffentlichungstag und Bekanntmachung des Hinweises auf die Patenterteilung: **28.08.1996**
(21) Anmeldenummer: 93119016.9
(22) Anmeldetag: 25.11.1993
(51) Int. Cl.: E05F 15/16, F16H 7/02

(54) **Riementrieb für einen Torantrieb**
Belt drive for door control
Transmission à courroie pour commande de porte

(30) Priorität: 27.11.1992 DE 4239962
(43) Veröffentlichungstag der Anmeldung: 01.06.1994
(73) Patentinhaber: Döring, Erich, Dr.h.c., CH-9442 Berneck (CH)
(72) Erfinder: Döring, Erich, Dr.h.c., CH-9442 Berneck (CH)
(74) Vertreter: Behrens, Dieter, Dr.-Ing.

(56) Entgegenhaltungen:
- DD-A- 238 093
- DE-A- 4 039 207
- FR-A- 1 379 737
- PATENT ABSTRACTS OF JAPAN vol. 14, no. 436 (M-1027)(4379) 18. September 1990 & JP-A-02 173 436 (NEC) 4. Juli 1990

## Beschreibung

Die Erfindung betrifft einen Torantrieb, insbesondere Paneel-, Roll- oder Schwingtorantrieb, vor allem für PKW-Garagen oder für Werkräume, mit einem motorisch angetriebenen Antriebsrad und einem über wenigstens ein Umlenkrad laufenden Riemen oder Gurt, wobei Mittel vorgesehen sind, mit denen vom Umlenkrad oder vom Riemen die Antriebskraft für das Öffnen und Schließen des Torblatts abgenommen und auf dieses übertragen wird.

Torriementriebe der oben genannten Art sind in vielfältigsten Ausführungen seit langem bekannt. Der Riementrieb kann einen unter Spannung über zylindrische Umlenkrollen geleiteten Flachriemen aufweisen, so daß die Übertragung des Antriebsmoments der angetriebenen Riemenscheibe auf den Riemen durch Kraft-bzw. Reibschluß erfolgt. Zur Erhöhung der übertragbaren Kraft werden Keilriemen (JP-Abstract 2-173 436, M-1027, Sept. 18, 1990, Vol. 14, No. 436), die über genutete Keilriemenscheiben geführt werden, eingesetzt. Auch ist es bekannt, die Riemen als Zahnriemen (DD-PS 238 093; FR-PS 1 379 737) auszubilden, wobei die Riemenscheiben auf ihrer Umfangsfläche eine entsprechende Zahnung aufweisen, beispielsweise also als angepaßte Zahnräder ausgebildet sind. Andere vergleichbare Antriebe sind solche mit Rundriemen in Form von glatten Stahlseilen, die über genutete Seilscheiben geführt sind, oder mit Stahlseilen, die im Abstand voneinander aufgesetzte Kugeln oder dergl. aufweisen, die in entsprechende Verbreiterungen von Nuten oder Umlenkscheiben eingreifen. Ferner werden Kettentriebe mit entsprechenden Kettenrädern in Torantrieben eingesetzt. Viele dieser Maßnahmen dienen dazu, eine formschlüssige Antriebskraftübertragung zu erreichen. Die Einsatzgebiete dieser Antriebe sind teilweise voneinander unterschiedlich, teilweise überlappen sie einander. Stärken und Schwächen bzw. Vor- und Nachteile dieser Antriebe sind hinreichend bekannt. Ebenso sind gesicherte Werkstoffkenntnisse für Flach-, Rund- und Keilriemen erarbeitet.

Der Erfindung liegt das Problem zugrunde, einen Riementorantrieb der eingangs genannten Art zu schaffen, der einen guten Kompromiß zwischen übertragbarer Antriebskraft, Betriebssicherheit, Herstellungskosten und Geräuscharmut im Betrieb darstellt.

Die Lösung dieses technischen Problems ist mit ihren Ausgestaltungen in den Patentansprüchen gekennzeichnet.

Die Erfindung besteht darin, daß das treibende Umlenkrad als Zahnrad ausgebildet ist und den Riemen, der aus allmählich dauerhaft verformbarem Werkstoff gefertigt ist, zwischen sich und dem anderen Zahnrad während des Umlaufs mitnimmt, indem die Zahnköpfe des einen Zahnrades den Riemen jeweils in die Zahnlücken des gegenüberliegenden Zahnrades so weit hineindrücken, daß der Riemen praktisch schlupffrei umläuft.

Der Riemen kann als textiles flaches oder rundes Gurtband aus Kunstfäden oder -fasern ausgebildet sein, also ein gewebter, geflochtener oder verseilter Riemen, und zwar behandelt oder unbehandelt, gummiert oder nicht gummiert, sein. Flache Gurtbänder sind in vielfältiger Ausbildungsform bekannt. Es eignen sich aber nur dauerhaft verformbare bzw. streckbare Materialien, wobei Polyethylenfäden wenig geeignet sind. Gute Ergebnisse lassen sich mit Gurten aus kalt gestreckten Polyester-, Polyamid- oder Polypropylen-Cordfäden erzielen. Die zulässige Umfangs- und Laufgeschwindigkeit ist naturgemäß begrenzt. Der Riemen soll aus allmählich dauerhaft verformbarem Werkstoff bestehen, der durch eine große Anzahl von Umläufen zwischen den Zahnrädern gestreckt und stabilisiert wird.

Flachriemen bestehen vorzugsweise aus einem Gewebe, wobei sich Dicke und Breite nach der zu übertragenden Kraft und Leistung richten.

Wird der Riementrieb für den Antrieb eines Garagen- oder Werkraumtores oder in einem Tortrieb oder in einem Garagen- oder Werkraumtor mit Mitteln zur Übertragung der Antriebskraft zum Öffnen und Schließen des Torblatts eingesetzt, so genügt ein bekannter Rolladengurt oder ein Seil aus Kunstfasern, wie sie wohlfeil erhältlich sind.

Bei den Zahnrädern kann es sich um konventionelle Zahnräder, bei denen die äußeren Kanten der Zähne abgerundet sind, oder um angepaßte Zahnräder handeln. Bei Verwendung von Rundriemen, wobei auch mehrere Rundriemen zur Erhöhung der übertragbaren Antriebskraft nebeneinander vorgesehen werden können, weist das angetriebene Zahnrad für jeden Rundriemen eine Umfangsnut auf, in der der Rundriemen etwa zur Hälfte eingelegt ist.

Im Betrieb wird der Riemen oder Gurt allmählich bleibend verformt und nimmt eine wellenförmige Gestalt an, die sich auch unter der Antriebszugbelastung überraschenderweise praktisch nicht streckt. Die Einleitung der Antriebskraft erfolgt zum großen Teil formschlüssig, ohne daß es dazu eines profilierten Ausgangsriemens, wie beispielsweise eines Zahnriemens, bedarf. Dadurch ist die Kraftübertragung gegenüber ungewellt bleibenden Flachriemen gesteigert, die lediglich durch Reibschluß angetrieben werden.

Zweckmäßig kann es sein, daß die Zahnräder unterschiedliche Durchmesser aufweisen, weil dadurch einerseits der Eingriff begünstigt ist, andererseits aber vom Antrieb des einen Zahnrades auf den Antrieb des anderen Zahnrades umschaltbar ist, also ein Schaltgetriebe verwirklicht ist, so daß von einer Laufgeschwindigkeit des Riemens auf eine andere umgeschaltet werden kann. Im Betrieb hat sich gezeigt, daß der Antrieb praktisch schlupffrei erfolgt, und zwar auch bei Stoßbelastung. Sind drei miteinander kämmende Zahnräder unterschiedlichen Durchmessers vorgesehen, über die der Treibriemen läuft, können drei Laufgeschwindigkeiten des Treibriemens verwirklicht werden.

Die Kosten des Riemens sind im Vergleich zu Ketten, Keilriemen, Zahnriemen und dergl. vergleichsweise gering, teilweise betragen sie nur etwa 10%. Grundsätzlich läßt der Riementrieb die Verwendung unterschiedlicher Zahnräder, d.h. solcher mit verschiedenen Zahnmodulen (Teilungen) zu. Sonderanfertigungen von Riemen sind im allgemeinen nicht erforderlich. Für nicht zu große Antriebsleistungen, solche, wie sie für den Antrieb für Garagentoren für ein und zwei PKW erforderlich sind, erfordern lediglich den Einsatz von Rolladengurten oder textilen Seilen. Solche und ähnliche Gurte sind sehr biegeelastisch und können daher auch über kleine Zahnräder laufen. Unter-und Oberseite der Riemen sind gleich griffig. Im Betrieb zeigt sich besondere Geräuscharmut, da metallische Teile nicht aufeinander laufen. Die Riemen sind als Meterware käuflich. Sie lassen sich durch Schrauben, Klebung oder Vulkanisation, je nach Ausbildung, zu endlosen Riemen verarbeiten. Sie können, insbesondere wenn es sich um textile Gurte handelt, farbig gewebt sein, um besondere Kennzeichnungseffekte zu bewirken. Rundriemen haben gegenüber Flachriemen den Vorteil, daß eine sich im Betrieb einstellende Drehung um die Längsachse des Riemens praktisch nicht erkennbar ist.

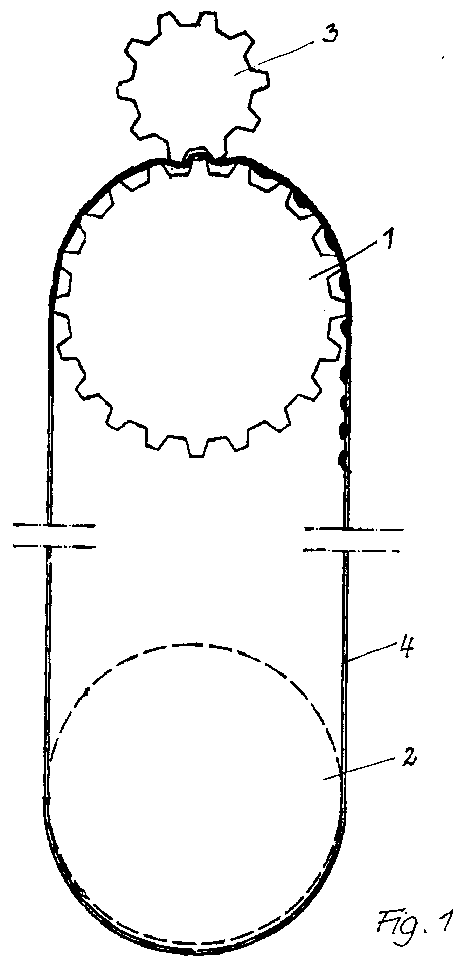

Ausführungsbeispiele der Erfindung sind anhand einer Zeichnung näher erläutert. Es zeigen
- Fig. 1: einen Torflachriementrieb im Längsschnitt mit einem kämmenden Zahnradpaar, und
- Fig. 2: einen Torrundriementrieb im Längsschnitt mit zwei kämmenden Zahnradpaaren.

Der Torriementrieb umfaßt ein angetriebenes Zahnrad bzw. ein Antriebsrad 1, ein mit erforderlichen Abstand angeordnetes getriebenes Rad 2, ein mit ersterem lose kämmendes zweites Zahnrad 3, das die Funktion eines Prägerades übernimmt, und einen gewebten Antriebsriemen oder -gurt 4. Die Räder 1 und 2 können beliebigen Abstand je nach den Erfordernissen des Einzelfalls aufweisen. Der flache Antriebsriemen 4 ist als Textilgurt ausgebildet und wird um das Antriebsrad 1 und das getriebene Rad 2 mit leichter Spannung aufgelegt. Das Prägerad 3 wird mit leichter Spannung, gegebenenfalls federnd, an das angetriebene Zahnrad 1 beigestellt. Die Beistellung ist so, daß der Riemen 4 mit den Zähnen des Prägerades 3 ein wenig in die Zahnlücken des Antriebsrades 1 eingedrückt wird.

Nach circa tausend Umläufen des Riemens hat dieser eine bleibende Wellenform angenommen. Die Wellen sind genau identisch mit dem Zahnmodul des Antriebsrades. Aus dem ehemals flachen Riemen wurde im Bereich der Kämmung der beiden Zahnräder ein Wellenriemen mit bleibenden Wellen. Der Gurtwerkstoff ist mit Hinblick auf diese bleibende Verformung auszuwählen.

Es können grundsätzlich auch dünne Riemen verwendet werden, bei denen die Wellung durch die Benutzung nicht im Riemen erhalten bleibt. Solche Riemen sind aber weniger geeignet. Sie führen auf der ablaufenden Seite zum Durchhängen. Dieser ist gegebenenfalls durch Spannrollen aufzunehmen. Das aber macht den Antrieb bei Antrieben für zwei Laufrichtungen kompliziert. Durch das Eintauchen des Textilriemens in die Zahnlücken des Antriebsrades ist ein Schlupf praktisch ausgeschlossen. Grundsätzlich kann sowohl das in der Zeichnung dargestellte große Zahnrad 1 als Antriebsrad dienen, wie auch das kleinere als Prägerad bezeichnete Zahnrad 3. Wenn zwischen dem Antrieb dieser beiden Räder umgeschaltet werden kann, ist ein Antrieb des Riemens 4 mit zwei Geschwindigkeiten möglich.

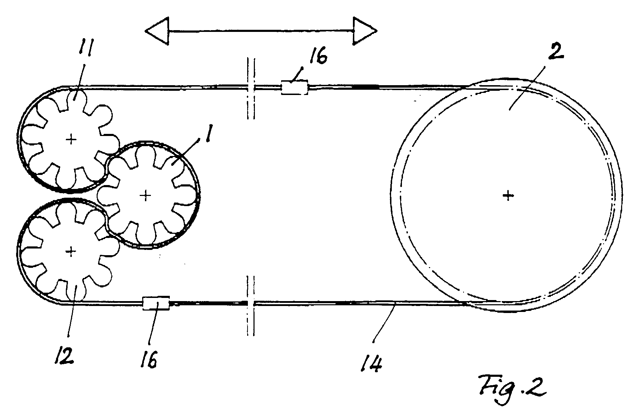

Auf dem Riemen 4 ist ein, in Fig. 2 dargestellter Abnehmer 16 vorgesehen, wenn beispielsweise ein Garagentor in zwei Richtungen zu bewegen ist, wobei der Betätigungsweg kleiner ist als der Abstand der beiden Zahnräder 1 und 2 voneinander, so daß der Abnehmer auf keines der Zahnräder 1 oder 2 aufläuft.

Bei der Ausführungsform nach Fig. 2 kämmen mit dem angetriebenen Zahnrad 1 zwei Zahnräder 11 und 12. Deren Zähne greifen etwas in die Zahnlücken des angetriebenen Zahnrads 1 ein. Über das Zahnrad 2 und die Zahnräder 1, 11 und 12 laufen mehrere, zueinander parallele Rundriemen 14, deren Durchmesser etwa 6 bis 8 mm beträgt. Die Rundriemen sind als gewebte Rundschnüre ausgebildet, die in etwa halbrunde Nuten im Umfang des angetriebenen Zahnrads 1 und vorzugsweise auch im Umfang des Zahnrads 2 eingelegt sind. Die kämmenden Räder 11 und 12 haben keine Nuten sondern drücken lediglich mit ihren Zähnen die Rundriemen ein wenig in die Lücken des Zahnrads 1 ein. Mehrere Rundriemen 14 können nebeneinander zum Einsatz kommen, wodurch die übertragbare Antriebskraft und die Sicherheit des Riementriebs erhöht wird. Fällt ein Rundriemen aus, können die übrigen Rundriemen weiter arbeiten.

## Patentansprüche

1. Torantrieb, insbesondere Paneel-, Roll- oder Schwingtorantrieb, vor allem für PKW-Garagen oder für Werkräume, mit einem motorisch angetriebenen Antriebsrad und einem über wenigstens ein Umlenkrad laufenden Riemen oder Gurt, wobei Mittel vorgesehen sind, mit denen vom Umlenkrad oder vom Riemen die Antriebskraft für das Öffnen und Schließen des Torblatts abgenommen und auf dieses übertragen wird,
dadurch gekennzeichnet,
daß das Antriebsrad als Zahnrad (1) ausgebildet ist und daß wenigstens ein zweites Zahnrad (3) vorgesehen ist, das mit dem ersten Zahnrad lose kämmt und einen Riemen (4) aus allmählich dauerhaft verformbarem Werkstoff so weit in dessen Zahnlücken drückt, daß der Riemen praktisch schlupffrei umläuft.

2. Torantrieb nach Anspruch 1,
dadurch gekennzeichnet,
daß der Riemen (4) aus allmählich dauerhaft verformbarem Werkstoff besteht, der durch eine große Anzahl von Umläufen zwischen den Zahnrädern gestreckt und stabilisiert wird.

3. Torantrieb nach Anspruch 1 oder 2,
dadurch gekennzeichnet,
daß der Riemen als Flachriemen ausgebildet ist.

4. Torantrieb nach Anspruch 1 oder 2,
dadurch gekennzeichnet,
daß der Riemen als Rundriemen ausgebildet ist.

5. Torantrieb nach Anspruch 4,
dadurch gekennzeichnet,
daß mehrere Rundriemen nebeneinander vorgesehen sind.

6. Torantrieb nach Anspruch 5,
dadurch gekennzeichnet,
daß das angetriebene Zahnrad für jeden Rundriemen eine Umfangsnut aufweist, in der der Rundriemen etwa zur Hälfte eingelegt ist.

7. Torantrieb nach den Ansprüchen 1 bis 3,
dadurch gekennzeichnet,
daß die Zahnräder (1, 3) unterschiedliche Durchmesser aufweisen.

8. Torantrieb nach Anspruch 7,
dadurch gekennzeichnet,
daß vom Antrieb eines ersten Zahnrads (1) auf den Antrieb eines anderen Zahnrads (3) umschaltbar ist.

## Claims

1. A door drive, especially sectional, shutter or over-the-head door drive, in particular for automobile garages or workrooms, comprising a motor-driven drive wheel and a belt or band which passes around at least one rotating guide wheel, wherein means are provided for deriving the drive force for opening and closing the door leaf from the drive wheel or the belt and transmitting said force to the door leaf,
**characterized** in that
the drive wheel is embodied by a gear (1) and wherein at least another gear (3) is provided which meshes loosely with the first gear, pressing a belt (4), which is made of material becoming gradually permanently deformed, into the gaps between the teeth of the first gear to such an extent that the belt travels practically without slip.

2. The door drive means as claimed in claim 1,
**characterized** in that
the belt (4) consisting of a material becoming gradually permanently deformed is stretched and becomes stabilized by a great number of passes between the gears.

3. The door drive means as claimed in claim 1 or 2,
**characterized** in that
the belt is embodied by a flat belt.

4. The door drive means as claimed in claim 1 or 2,
**characterized** in that
the belt is embodied by a round belt.

5. The door drive means as claimed in claim 4,
**characterized** in that
several round belts are provided side by side.

6. The door drive means as claimed in claim 5,
**characterized** in that
the driven gear is formed with a separate circumferential groove for each round belt, and approximately one half of each round belt is received in its associated groove.

7. The belt transmission as claimed in claims 1 to 3,
**characterized** in that
the gears (1, 3) have different diameters.

8. The belt transmission as claimed in claim 7,
**characterized** in that
a shift of the drive from a first gear (1) to another gear (3) is possible.

## Revendications

1. Dispositif d'entraînement de porte, en particulier dispositif d'entraînement de porte à battants, de porte articulée ou de porte basculante, comprenant une roue motrice entraînée par moteur et au moins une courroie ou bande circulant sur au moins une roue de renvoi, des moyens étant prévus pour transmettre la force d'entraînement de la courroie ou de la roue de renvoi au panneau de porte pour l'ouverture et la fermeture de ce dernier,
caractérisé en ce que
la roue motrice est une roue dentée (1) et en ce qu'il comprend au moins une seconde roue dentée (3) qui engrène de façon lâche avec la première roue dentée et presse dans les entredents de cette dernière une courroie (4) en matière plastique pouvant être déformée progressivement de manière permanente suffisamment pour que la courroie tourne pratiquement sans patiner.

2. Dispositif d'entraînement de porte selon la revendication 1
caractérisé en ce que
la courroie (4) est en une matière plastique pouvant être déformée progressivement de manière permanente qui peut être étirée et stabilisée par un grand nombre de tours entre les roues dentées.

3. Dispositif d'entraînement de porte selon la revendication 1 ou 2
caractérisé en ce que
la courroie est une courroie plate.

4. Dispositif d'entraînement de porte selon la revendication 1 ou 2
caractérisé en ce que
la courroie est une courroie ronde.

5. Dispositif d'entraînement de porte selon la revendication 4
caractérisé en ce que
plusieurs courroies rondes sont prévues côte à côte.

6. Dispositif d'entraînement de porte selon la revendication 5
caractérisé en ce que
la roue dentée motrice présente une gorge périphérique pour chaque courroie ronde, dans laquelle la courroie ronde est insérée environ à moitié.

7. Dispositif d'entraînement de porte selon les revendications 1 à 3
caractérisé en ce que
les roues dentées (1, 3) présentent de diamètres différents.

8. Dispositif d'entraînement de porte selon la revendication 7
caractérisé en ce que
il est possible de passer de l'entraînement d'une première roue dentée (1) à l'entraînement d'une autre roue dentée (3).
